(19) Europäisches Patentamt
European Patent Office
Office européen des brevets

(11) EP 0 915 422 B1

(12) **EUROPEAN PATENT SPECIFICATION**

(45) Date of publication and mention of the grant of the patent:
**01.03.2006 Bulletin 2006/09**

(51) Int Cl.:
*G06F 11/22* (2006.01) *G06F 9/44* (2006.01)

(21) Application number: **98120783.0**

(22) Date of filing: **02.11.1998**

(54) **Expert system**

Expertensystem

Système expert

(84) Designated Contracting States:
**DE FR GB**

(30) Priority: **06.11.1997 EP 97119432**

(43) Date of publication of application:
**12.05.1999 Bulletin 1999/19**

(73) Proprietor: **Hewlett-Packard Company**
**Palo Alto,**
**California 94304 (US)**

(72) Inventor: **Krug, Adrian**
**40599 Düsseldorf (DE)**

(74) Representative: **Jones, Bruce Graeme Roland et al**
**Hewlett-Packard Limited,**
**Intellectual property Section,**
**Filton Road**
**Stoke Gifford,**
**Bristol BS34 8QZ (GB)**

(56) References cited:
**EP-A- 0 334 113**
**GB-A- 2 271 005**
**US-A- 5 257 185**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

FIELD OF THE INVENTION

The present invention relates to an expert system; for example for help desk applications. In particular, the invention relates to an expert system comprising search result presentation and user guidance. In such help desk, applications, a user who has problems with a hardware or software product typically contacts the help desk, for example by telephone or electronic mail, to get a solution for the problem. More particularly, the invention relates to flexible systems for knowledge acquisition, knowledge presentation, decision support and knowledge capturing used in the technical support and help desk environment. It also relates to the area of information management and knowledge base searching and automatic knowledge structuring.

BACKGROUND OF THE INVENTION

Artificial intelligence systems, also named expert systems, have become more commonly used in the help desk or call center environment to enable users to provide the requested information to the customers. These systems normally use questions and answers to guide the user to the possible solution. Such systems are known from US 5 257 185 and GB 2 271 005. Some systems also provide the possibility to start the troubleshooting or solution finding processes with a natural language search. Based on this search result the next questions are presented by the system. The decision which question is presented to the user is usually based on the content of the knowledge base and the submitted search string. The process leading to the presentation of this question to the user is not displayed. The user is thus not able to check if this is the right question at this place and if the system leads him to the right information. None of the mentioned known systems deals with a method wherein the user can directly search the knowledge base. The two mentioned systems describe methods for user guidance based on question and answers from step to step, but they do not describe a method which presents the automatically determined information to the user after selecting a search result.
Also, standard full text retrieval system, like existing web (Internet), search engines, are not very useful for help desk agents, because too many found information means too much time to find the right document in it. Like on the web, too much information leads to no additional helpful information. The agent has to review all of the found documents until he finds the right one. This takes too much time and additional effort. In such a case, the system has to provide additional questions to the user to guide him to the needed information. This could be done by a additional property, like the relationship between the documents/information (e.g. references from one to another document on the web), which is helpful to find and evaluate the right one.
So, the used search/evaluation algorithm or method builds the core of the help desk or support troubleshooting system. Search algorithms for expert systems are very important, especially the search result has to be presented very clearly to the users. Especially when using a direct natural language search, the users very often lose the overview, because the systems do not present the information to the user why it evaluates this as the next needed question. This often leads to wrong solutions because the decision finding process is not completely clear to the user.
The usage of an expert system with a well designed, easy to use and fast accessible user interface can enable the first line people to solve most of the customer problems during the first contact. Only cases which cannot be handled by the first line have to be transferred to more specialized people in the background, who can answer the customer question.
Help desk environment search has to be very fast. Search results have to be easily correctable by the user. To be able to do this, the evaluation process has to be presented to the user. This makes it easy to adapt the existing customer problem to the retrieved problem from the knowledge base. It also enables the user to make checks if the problem retrieved from the system is similar to his/her problem.
An expert system which meets the needs of the call center and help desk environment has to solve the following problems:

1. fast search evaluation process, fast response time to search queries
2. search result presentation should give the user the ability to check the machine evaluation process
3. fast questions/answer guidance to solution/needed information
4. easy knowledge creation, maintenance, transfer process
5. structured automatic knowledge capturing
6. knowledge base structure has ability to quickly subdivide areas /domains
7. automatic structured knowledge generation from external sources

Existing approaches like case base reasoning (CBR) or decision trees cannot meet these needs completely.
CBR cannot meet the need of high performance answers when the knowledge base becomes large like in the software problem troubleshooting environment.

Further, the solution finding and evaluation process is not clear to the user. Some of the CBR systems provide a rule based functionality to automatically pre-answer questions to make this process clear to the user.

This approach means additional maintenance work and is very sensible to typing errors or inconsistent rules. Pre-answered questions have to be generated online out of the submitted search query and not from a predefined set of rules together with the query. The document EP 334 113 discloses a method for automated generation of inference processing which could be used for automated rule generation, but this system and the corresponding method is only adaptable to fact-based systems. In contrast thereto, the method of the present invention as described in more detail below, is adaptable to each kind of pre-structured information, not only to fact-based systems.

Clear decision trees are very fast in access, but once a decision is made it cuts off all similar cases, which do not meet this decision. Due to this property, decision trees do not allow to retrieve similar problems from different parts of the knowledge base. They are also very context-sensitive; questions and answers have to follow the same path. Standard decision tree methods also do not provide the ability to directly jump into selected areas of the knowledge base. This is especially the case for the systems disclosed in GB 2 271 005 and US 5 257 185. Both known systems do not comprise a method for direct entry using natural language search or search query to enter the troubleshooting process. Nor do the known systems even comprise a method how to evaluate such a search result, nor do they display this to the user.

The core of all these known system is the search algorithm to find the right information or similar information in the knowledge base. After evaluation of the information, the selected information has to be presented in such a form to the user, that the user can very quickly check if the presented information is the right information he needs, and if not, what has to be changed to find the right one. The additional solution information finding process has to be guided by e.g. questions and answers.

## SUMMARY OF THE INVENTION

It is thus an object of the present invention to provide an expert system which avoids the mentioned problems of prior art systems.

The invention is set out in the claims.

The invention thus provides a novel way of search result evaluation and user guidance. In an embodiment of the invention, all the questions and answers leading to a particular result are displayed to the user, thus ensuring, among others, that the user gets trust in the decisions of the system.

The present invention addresses the above mentioned problems in the prior art by providing a definition of a knowledge representation in a special structure as well as an optimized search which uses not only the content but also structure, the given relationship between the distributed information parts, to find and evaluate the needed information inside of the knowledge base.

The invention provides the definition of a knowledge base structure which allows a fast segmentation of the knowledge base into different categories, as well as the identification of similar information areas inside of the knowledge base. The presented knowledge base structure allows the reuse of existing information pieces to save additional work when creating or maintaining knowledge.

The invention also provides a fast search mechanism to identify and select similar information pieces in big size knowledge bases of this structure. This mechanism provides also the possibility to identify the exact place of the information inside the knowledge base, which helps the user to check, if the found information corresponds to his needs. In detail, this means that the search automatically suggests the best matching piece of information and displays all automatically answered questions which are needed to lead to this information. This enables the user to check if the presented information matches his needs. Furthermore, if a submitted search string cannot uniquely classify the information, the invention provides the ability to guide the user to a unique information piece by questions and answers or to even easily correct the suggested result.

The invention also provides the ability to automatically load and convert pre-structured information into the knowledge base. This pre-structured information can be a CBR knowledge base or an existing decision tree knowledge base. This can also be the content of a Intranet or Internet site, where the pre-structure is given by the links inside of the documents. It is only important that the information which has to be loaded into the knowledge base has a meta structure which represents the relationship between the different information pieces. Via this mechanism, the invention provides for automatic structuring of information and automatic extension of the knowledge base.

The invention also provides a user-friendly interface to access the knowledge inside the knowledge base. Due to the question/answer guidance of this interface, the user can find, without deep knowledge, the right information inside the knowledge base.

Furthermore, the invention provides tools for manual creation of new or additional knowledge inside an existing knowledge base, as well as maintenance and administration tools for knowledge restructuring.

Due to the chosen structure and knowledge representation inside of the knowledge base, the invention provides a knowledge maintenance mechanism based on usage and access statistics.

BRIEF DESCRIPTION OF THE DRAWINGS

In the following, an exemplary embodiment of the invention will be described in detail with reference to the drawings, wherein

FIG. 1 shows an embodiment of an actual existing web (Internet) based user interface to the knowledge base. The left side of the screen presents the question answer guidance to the information, the right side of the screen presents the search engine results. This side is also used to present additional information from the unstructured part the knowledge base.

FIG. 2 illustrates the outline of the knowledge base structure, with its naming convention, which allows to uniquely identify each piece of information inside of the knowledge base.

FIG. 3 presents the first phase of the search evaluation process inside the structured knowledge base to find the right piece of information. In this phase, only the content is taken to evaluate the search result.

FIG. 4 demonstrates the first step of the second phase of the evaluation process, in which the structure and relationship between the information pieces is taken to make a reevaluation of the first phase results.

FIG. 5 shows how the results of the second phase are taken to find the best matching information inside the knowledge base, and how the knowledge base is subdivided into similar clusters.

Fig6 shows in detail an example how the results from a search query are displayed to the user on a screen.

FIG. 7 shows an example of a screen display wherein search engine results are displayed to the user together with the automatically created history.

FIG. 8 shows an example of the navigation possibilities for the user taking into account the history/path.

DETAILED DESCRIPTION OF THE INVENTION

A knowledge base structuring method which affords the above mentioned and other beneficial features in accordance with an exemplary embodiment of the invention will be described below with the reference to the FIGS. 1-8. Those skilled in the art will readily appreciate that the description given herein with respect to those figures is for explanatory purposes only and is not intended in any way to limit the scope of the invention.

For example, although the present invention was realized using UNIX commands to implement the needed algorithms and UNIX file system to represent and store the knowledge base, those skilled in the art will appreciate that the general principles of the invention may be used with different operating systems and programming environments or languages.

A particular embodiment of the invention will be described for the use of the invention in a help desk environment to support the help desk agents with troubleshooting information regarding technical software problems. To see the new concepts and ideas of this invention, it is important to understand the knowledge representation and identification inside of the knowledge base of the system, presented in FIG. 2.

The symbols used in Figure 2 have the following meaning:

Triangle with "Q" inside: question node file, name like node-id
Square with "A" inside: action node file, name like node-id
Rhombus with "C" inside: attached document
Arrow starting from triangle: link via node-id name
Circle with arrow starting from it: link via symbolic link in file system
Designations of the type "dn/Q1.?.?": node name (Node-ID)
Designations of the type "dn/A1.?.?": node name for an action.

The knowledge inside of the knowledge base of the invention can be divided into two parts, an unstructured part shown at the right side of Figure 2, and a structured part shown at the left side. While the unstructured part consists of a collection of documents, or references to documents, the structured part is represented by a network or directed graph of nodes; this structure can also be defined as a decision graph. In the structured part, the knowledge information is distributed over the different nodes, so that each node owns only one piece of information which is needed to lead to the next node. In the preferred embodiment for a help desk support system each node consists of a question together with answers, which lead to the next question until a final solution is found. This decision graph structure is similar to a directed graph while the question corresponds to a node in the graph, an answer corresponds to a directed edge of the graph. It is comparable to finite state automata which are used in compiler building techniques (e.g., A.V. Aho, R. Sethi, J.D. Ullman: "Compilers", Addison Wesley).

Each node in the structured part of the knowledge base can also contain a link/reference to a document in the unstructured part of the knowledge base.

With this concept, the structured part builds a meta structure to the unstructured part of the knowledge base. This structure allows to represent a sequence of conditions and symptoms (e.g. questions and answers) which are needed to describe the resulting information. To uniquely identify each node inside of the structured part, the knowledge base has a special naming convention for each node, this means in detail, that every node has a unique name, the node-id. Due to this naming convention, a fast subdivision of the knowledge base in parts belonging together is possible, as will be explained further below.

The knowledge base has a hierarchical structure. The most common node, or the first question has the node-id Q1. This node represents the entry point to the knowledge base. This is the father node of all other nodes of the knowledge base. Each node below this node inherits the name of his father completed by the number of the information/answer which leads to this node. In detail this means if the father node has the node-id Q1.1, and three edges lead from this node to other nodes, these nodes have the node-id Q1.1.1, Q1.1.2 and Q1.1.3. If a node has a reference to documents from the unstructured part of the knowledge base, these documents are also associated with the node-id of this node. FIG. 2 shows an example of the naming convention. In contrast to the document GB 2 271 005, the described knowledge base also allows even cyclic graphs and not only trees.

In the preferred embodiment of the invention, each node is represented by a single ASCII file in the UNIX file system. The file name corresponds to the assigned node-id. So each node can be easily identified by its filename which equals the node-id.

Nodes which contain edges which lead to other nodes, question-nodes, are stored in a different directory in the file system than leaf nodes, action-nodes, which do not have any outgoing edges. This data storing method allows separate management and reporting of the two possible types of nodes, question- and action-nodes. The content of each node is described by an easy extendable description language. The complete definition of the knowledge database language for the nodes is described in extended BNF (Backus-Naur-Form) in the Appendix at the end of the present description.

A typical question node has the following structure:

```
QUESTION::ADMED,15.137.22.126,14:14 08/26/97::What is the nature of your HP-UX problem?
LNKDOC::http://www.grc.hp.com
ADDDOC::hpux/demo.htm
ANSWER::none of the following::Q1.1
ANSWER::Instalation/upgrade::Q1.2
ANSWER::LVM::Q1.3
ANSWER::Kernel::/krn/Q1
BEGIN TEXT
this area can contain additional text as description to the node
END TEXT
```

A typical action-node has the following structure:

```
ACTION::ADMED,hprtdc44.grc.hp.com,16:16   02/12/97::HPUX;9.X   to10.X   short   instruction
upgrade
BEGIN TEXT
fax the attached document to the customer.
```

END TEXT

ADDDOC::hpux/upgrade-kurzanl.fax

ADDDOC::hpux/upgrade_kurzanl.txt

The present structure and naming convention of the invention provides the following advantages compared to the prior art:

1. Due to the defined naming convention of the knowledge base this invention provides a fast identification of similar information areas. This process is described in detail in the following parts (see the search algorithm).
2. The chosen naming convention and structure allows a fast and easy method to determine the exact path to each node only by knowing the node-id. This allows a clear presentation of the search results to the user by providing of all needed information/answer which lead to this node.
3. Due to the direct linked relationship between the nodes, each node knows about its successor nodes, the access time from one node to the other is constant, which is very important for fast help desk systems.
4. Due to the chosen distributed knowledge storing, only small pieces of information are stored in one file, the structure allows efficient parallel access and maintenance of this data.
5. Furthermore, the naming convention allows the parallel extension of the knowledge base, without the problem that the contents get inconsistent. This feature is caused by the hierarchical structure of the naming convention and knowledge base.
6. The invention also provides the ability to convert each existing pre-structured information into this structure, to get the benefits of this invention. For example, existing CBR knowledge bases can be automatically converted into this format to benefit from the search algorithm, or web sites can also be converted into this format to provide the user a much better, structured and guided search to its content.

The invention furthermore provides a very efficient method of identifying and presenting similar information inside of the knowledge base. In the following part, the process of identification and presentation of information will be explained in detail.

Today, existing search engines only use the content of the stored documents to evaluate a search result. The present invention does not only take the content of the documents to evaluate the search result, it also takes care of the structure or relationship in which the information belongs together. This method allows a much better evaluation of the information. In particular, it provides a question/answer guided search possibility which leads a user to needed information.

In the approach according to EP 334 113, an inference is made for fact-based systems. Different thereto, the search evaluation method of the invention is not limited to fact-based expert systems; there is even no need to provide or define an additional structure as in the mentioned prior art method.

A preferred embodiment of the search method consists of two phases which, combined together, give a result which is evaluated regarding content and structure of the information.

The first phase of the process, shown in FIG. 3, makes an evaluation of the information inside the knowledge base only regarding content. For this step, an existing standard full text search engine or algorithm can be taken. In the preferred embodiment of the invention the freeWAIS-sf (Wide Area Information Servers - structured fields, i.e., a search engine) is taken for the content-related search evaluation. After this phase, each node gets a rating regarding its content (see FIG. 3, numbers to the right of the triangles) . The rating of this node is made based on a user-submitted string to the search engine. This rating builds the base for the next phase of the evaluation process. The other symbols used in FIG. 3 have the following meaning (similar to the symbols in FIG.2):

Triangle: node file, name like node-id
Designations of the type "dn/Q1.1.1": node-id name
Numbers (e.g., 0, 1, 2, 3, 4) : standard full text search rating

The second phase of the process evaluates the knowledge base regarding structure and relationship of the nodes and finishes with the best matching information inside the knowledge base as well as the next similar information. The detailed process is also shown in FIGS. 4 and 5.
This phase itself can be subdivided into two steps:

1. Phase 2a of search evaluation process; structure related evaluation (FIG 4.)
2. Phase 2b of search evaluation process, evaluation and selection of best match (FIG 5.)

Based on the results of the first phase during the phase 2a these results are used to reevaluate the knowledge base regarding relationship of the nodes. This process is made top down, so that each node gets a new value Vnew assigned by the following formula:

$$Vnew = F(Vold, Vfathers, Vsons).$$

Vold corresponds to the value assigned to this node from the first phase, while Vfathers corresponds to the values assigned to the father nodes of this node, in this phase (2a).
Vsons corresponds to the values assigned to the son nodes in the first phase. Vfathers as well as Vsons are vectors of values. This means, one node can have more than one father as well as more than one son nodes.
In the preferred embodiment the following formula is used for evaluation:

$$F(x,y[],z[])= x+ sum (y[]),$$

this means

$$Vnew = Vold + sum (Vfathers) \qquad \text{(Formula 1)}$$

In the above formula, y[], z[] represent a vector of values, sum (y[]) corresponds to the sum of all elements of the assigned vector.
After finishing the top down evaluation process of this phase each node has a rating regarding content and relationship inside the knowledge base.
The symbols used in FIG. 4 have the following meaning:

Triangle: node file, name like node-id
"dn/Q1.1.1" : node-id name
Numbers in square brackets: phase 2a structured rating
Other numbers: standard full text search rating

The following phase 2b (FIG.5) subdivides the knowledge base into areas of similar information and finishes with the best matching information from the knowledge base, based on the query submitted by the user. During this process the information is evaluated bottom up, this means from the deepest nodes to the top. This means that evaluated values are processed from son to father node. Similar to the first phase the evaluation is done by the following formula:

$$Vend = F(Vnew, Vfathersnew, Vsonsnew).$$

Vend corresponds to the final new value of the node.
Vnew corresponds to the value of this node from phase 2a.
Vfathersnew corresponds to the values of the fathers from phase 2a.
Vsonsnew corresponds to the values of the sons from phase 2b.
In a preferred embodiment, the following formula is used for evaluation:

$$F(x,y[],z[])= max(z[]),$$

this means:

$$Vend=max(Vsons), \qquad \text{(Formula 2)}$$

or the new value of the node is the maximum of the values of its son nodes.

Like in Formula 1, y[], z[] mean vectors of values, max(z[]) selects the maximum of the vector elements.

The symbols used in FIG.5 mean the following:

Triangle: node file, or attached cookbook
"Dn/Q1.1.1": Node-id name
Numbers in square brackets: 2a. Phase structured rating
Numbers in round brackets: 2b. Phase best path evaluation
Other numbers: standard full text search rating
Arrows with two heads: best solution path

After finishing this phase, there is at least one path through the knowledge base which fits best to the submitted query of the user regarding content and relationship of the nodes to each other. A descending sorting of the node regarding its rating present the next similar areas of the knowledge base.
This evaluation process provides, compared to the existing search evaluation processes, the following advantages and new features:

1. this evaluation approach takes care not only of the content, but also of the relationship of the information. This means that information which belongs together because of it relationship is evaluated together and not in an isolated or separated manner. This also means that the process finishes in a much better evaluation of the information.
2. Due to the chosen naming convention, the search result can be presented to the user together with all needed steps, which lead to this information. This give the user the ability to easily check if the presented search result really corresponds to his needs (see FIGs. 6 and 7) . It enables also the user to correct the search result and follow the guided question/answer structure to the next best fitting match (see FIGs 7 and 8).
3. Due to the chosen naming convention in the preferred embodiment, the search evaluation process consists of the following algorithm:

    1. Phase 1 evaluation produces a list of node-id together with rating
    2. sort the result list from step 1 ascending by node-id name
    3. apply the evaluation formula (Formula 1) to the nodes top down
    4. sort the result list from step 3 descending by node-id name
    5. apply the evaluation of formula (Formula 2) to the nodes bottom up
    6. sort the result list from step 5 descending by last given rating of each node.

4. Due to the distributed structure of the content and evaluation process, the evaluation can also be effectively implemented on massive parallel systems.

FIGs 6-8 further illustrate the advantages of the present invention. FIGs 6-8 are exemplary screen displays of a computer as they are shown to the user of an expert system according to the invention. Figs. 6-8 also comprise "balloons", such as "search query", "start search", "rating", etc. in FIG.6. These "balloons" are not displayed on the computer screen, but only serve for explanation purposes in connection with FIGs 6-8.

FIG.6 shows in detail how the results from a search query are displayed to the user. Besides the rating of the result, the kind of the node, the final solution (exclamation mark) or further questions needed (question mark) are displayed to the user. FIG.7 illustrates the process how a user selected search result is automatically displayed together with the history or path information by the knowledge browser. FIG.8 shows the navigation possibilities to the user, using the history path presented by the search result, to correct the system generated suggestion.

The present invention is being used, for example, for help desk support of software and hardware problems in a response center. With the help of the present system, first line agents in the response center are able to solve problems which before needed specialized qualifiers or response center engineers. The invention can also be used to provide a self-qualification and solution interface to customers on the Internet.

The invention can also be used to provide a much better interface to searching of web sites and automatic structuring of web information. Due to the usage of the structure and content, the evaluation is much better than with content only. Also, the ability to present the whole environment which leads to the information is very useful for the users to locate and check the presented information. Due to the distributed data structures of the invention, it is possible to provide additional online editor and maintenance tools for the knowledge base.

## Claims

1. An expert system for providing results to queries of users, having a knowledge base, at least part of which is structured as a decision graph, wherein questions correspond to nodes and answers to edges of the decision graph, and wherein a result to a user query is a path in the decision graph, i.e. a sequence of questions and answers, **characterised in that**:

    the expert system is adapted to automatically obtain at least one path, i.e. to automatically answer questions, which path fits best to the user query,

    wherein obtaining the path is based on ratings of nodes, wherein the nodes have an original rating regarding their content, and wherein the expert system is adapted to modify the original rating of a node depending on the original rating of at least one connected adjacent node to obtain the rating on the basis of which path fits best to the user query and wherein the expert system is adapted to present the automatically obtained questions and answers to the user.

2. An expert system according to claim 1 wherein the nodes are arranged in a hierarchy, each node (dn/Q1.3.2) being linked directly to at least one of: (i) at least one father node (dn/Q1.3) at an adjacent higher level of the hierarchy, and (ii) at least one son node (dn/Q1.3.2.1) at an adjacent lower level of the hierarchy.

3. An expert system according to claim 2, wherein the system is adapted to modify the orignal ratings or intermediate ratings of the nodes on the basis of each node's father and/or son nodes.

4. An expert system as in any one of the preceding claims, wherein the system is adapted to allow the user to change the automatically obtained path representing the automatically obtained questions and answers.

5. An expert system according to any one of the preceding claims, wherein the system is adapted to present to the user the automatically obtained questions and answers in a structured question/answer form.

6. An expert system according to any one of the preceding claims, wherein the system is adapted to evaluate the original rating of a node based on a full text search engine or algorithm.

7. An expert system according to any one of claims 2 to 6, wherein the system is adaptetd to modify the original ratings of the nodes in two processes, wherein one process is made top-down in the decision graph, and the other process is made bottom-up in the decision graph.

8. An expert system according to claim 7, wherein the system is adapted to modify the original ratings in the first process to obtain intermediate ratings, and to modify the intermediate ratings in the second process, wherein the path is obtained based on the ratings produced in the second process.

9. An expert system according to claim 8, wherein the system is adaptetd to evaluate, in the top-down process, the produced intermediate ratings as the respective node's original rating plus the sum of the original ratings of all the node's father nodes.

10. An expert system according to claim 8 or 9, wherein the system is adaptetd to evaluate, in the bottom-up process, final ratings as the maximum of a node's son nodes.

11. A method of providing results to queries of users performed by an expert system hav ing a knowledge base, at least part of which is structured as a decision graph, wherein questions correspond to nodes and answers to edges of the decision graph, and wherein a result to a user query is a path in the decision graph, i.e. a sequence of questions and answers, **characterised in that** the method comprises the steps of:

    evaluating original ratings of the nodes regarding their content;
    modifying the original ratings of the nodes depending on the original ratings of at least one of connected adjacent nodes to obtain a final ratings;

automatically obtaining at least one path, i.e. a sequence of questions and answers, based on the final ratings, which path fits best to the user query;
presenting the automatically obtained questions and answers represented by the path to the user.

**Patentansprüche**

1. Ein Expertensystem zum Liefern von Ergebnissen auf Abfragen von Benutzern, das eine Wissensbasis aufweist, wobei zumindest ein Teil desselben als ein Entscheidungsgraph strukturiert ist, wobei Fragen Knoten und Antworten Flanken des Entscheidungsgraphs entsprechen, und wobei ein Ergebnis auf eine Benutzerabfrage ein Pfad in dem Entscheidungsgraph ist, d. h. eine Sequenz von Fragen und Antworten, **dadurch gekennzeichnet, dass**:

   das Expertensystem angepasst ist, um automatisch zumindest einen Pfad zu erhalten, d. h. Fragen automatisch zu beantworten, welcher Pfad am besten zu der Benutzerabfrage passt,

   wobei das Erhalten des Pfads auf Bewertungen von Knoten basiert, wobei die Knoten eine ursprüngliche Bewertung bezüglich ihres Inhalts haben, und wobei das Expertensystem angepasst ist, um die ursprüngliche Bewertung eines Knotens abhängig von der ursprünglichen Bewertung von zumindest einem verbundenen benachbarten Knoten zu modifizieren, um die Bewertung auf der Basis dessen zu erhalten, welcher Pfad am besten zu der Benutzerabfrage passt, und wobei das Expertensystem angepasst ist, um dem Benutzer die automatisch erhaltenen Fragen und Antworten zu präsentieren.

2. Ein Expertensystem gemäß Anspruch 1, bei dem die Knoten in einer Hierarchie angeordnet sind, wobei jeder Knoten (dn/Q1.2.3) direkt mit zumindest einem der folgenden verbunden ist: (i) zumindest einem Vaterknoten (dn/Q1.3) auf einer benachbarten höheren Hierarchieebene und (ii) zumindest einem Sohnknoten (dn/Q1.3.2.1) auf einer benachbarten niedrigeren Hierarchieebene.

3. Ein Expertensystem gemäß Anspruch 2, bei dem das System angepasst ist, um die ursprünglichen Bewertungen oder Zwischenbewertungen der Knoten auf der Basis des Vater- und/oder Sohnknotens jedes Knotens zu modifizieren.

4. Ein Expertensystem gemäß einem der vorhergehenden Ansprüche, bei dem das System angepasst ist, um es dem Benutzer zu ermöglichen, den automatisch erhaltenen Pfad zu ändern, der die automatisch erhaltenen Fragen und Antworten darstellt.

5. Ein Expertensystem gemäß einem der vorhergehenden Ansprüche, bei dem das System angepasst ist, um dem Benutzer die automatisch erhaltenen Fragen und Antworten in einer strukturierten Frage/Antwort-Form zu präsentieren.

6. Ein Expertensystem gemäß einem der vorhergehenden Ansprüche, bei dem das System angepasst ist, um die ursprüngliche Bewertung eines Knotens auf der Basis einer Volltextsuchmaschine oder eines Volltextsuchalgorithmus zu bewerten.

7. Ein Expertensystem gemäß einem der Ansprüche 2 bis 6, bei dem das System angepasst ist, um die ursprünglichen Bewertungen der Knoten in zwei Prozessen zu modifizieren, wobei ein Prozess von oben nach unten in dem Entscheidungsgraph durchgeführt wird, und der andere Prozess von unten nach oben in dem Entscheidungsgraph durchgeführt wird.

8. Ein Expertensystem gemäß Anspruch 7, bei dem das System angepasst ist, um die ursprünglichen Bewertungen in dem ersten Prozess zu modifizieren, um Zwischenbewertungen zu erhalten, und um die Zwischenbewertungen in dem zweiten Prozess zu modifizieren, wobei der Pfad auf der Basis der Bewertungen erhalten wird, die in dem zweiten Prozess erzeugt werden.

9. Ein Expertensystem gemäß Anspruch 8, bei dem das System angepasst ist, um bei dem Prozess von oben nach unten die erzeugten Zwischenbewertungen als die ursprüngliche Bewertung des jeweiligen Knotens plus der Summe der ursprünglichen Bewertungen aller Vaterknoten des Knotens zu bewerten.

10. Ein Expertensystem gemäß Anspruch 8 oder 9, bei dem das System angepasst ist, um bei dem Prozess von oben nach unten endgültige Bewertungen als Maximum der Sohnknoten eines Knotens zu bewerten.

**11.** Ein Verfahren zum Liefern von Ergebnissen auf Abfragen von Benutzern, das durch ein Expertensystem durchgeführt wird, das eine Wissensbasis aufweist, wobei zumindest ein Teil desselben als ein Entscheidungsgraph strukturiert ist, wobei Fragen Knoten und Antworten Flanken des Entscheidungsgraphs entsprechen, und wobei ein Ergebnis auf eine Benutzerabfrage ein Pfad in dem Entscheidungsgraph ist, d. h. eine Sequenz von Fragen und Antworten, **dadurch gekennzeichnet, dass** das Verfahren folgende Schritte umfasst:

Bewerten ursprünglicher Bewertungen der Knoten bezüglich ihres Inhalts;
Modifizieren der ursprünglichen Bewertungen der Knoten abhängig von den ursprünglichen Bewertungen von zumindest einem der verbundenen benachbarten Knoten, um endgültige Bewertungen zu erhalten; und
automatisches Erhalten von zumindest einem Pfad, d. h. einer Sequenz von Fragen und Antworten auf der Basis der entgültigen Bewertungen, welcher Pfad am besten zu der Benutzerabfrage passt;
Präsentieren der automatisch erhaltenen Fragen und Antworten, die durch den Pfad dargestellt werden, dem Benutzer.

## Revendications

**1.** Un système expert pour fournir des résultats à des interrogations d'utilisateurs, incluant une base de connaissance dont au moins une partie est structurée sous forme de graphe de décision, dans lequel des questions correspondent à des noeuds et des réponses à des bords du graphe de décision, et dans lequel un résultat pour une interrogation d'utilisateur est un trajet dans le graphe de décision, c'est-à-dire une séquence de questions et de réponses, **caractérisé en ce que**
le système expert est apte à obtenir automatiquement au moins un trajet, c'est-à-dire à répondre automatiquement à des questions, trajet qui s'ajuste au mieux avec l'interrogation de l'utilisateur,
où l'obtention du trajet est basée sur des cotes de noeuds, où les noeuds possèdent une cote d'origine en ce qui concerne leur contenu, et où le système expert est apte à modifier la cote d'origine d'un noeud en fonction de la cote d'origine d'au moins un noeud adjacent connecté pour obtenir la cote sur la base de laquelle un trajet s'ajuste au mieux avec l'interrogation de l'utilisateur, et où le système expert est apte à présenter à l'utilisateur les questions et réponses obtenues automatiquement.

**2.** Un système expert selon la revendication 1, dans lequel les noeuds sont agencés en une hiérarchie, chaque noeud (dn/Q1.3.2) étant lié à au moins, soit (i) au moins un noeud générateur (dn/Q1.3) à un niveau supérieur adjacent de la hiérarchie, soit (ii) au moins un noeud engendré (dn/Q1.3.2.1) à un niveau inférieur adjacent de la hiérarchie.

**3.** Un système expert selon la revendication 2, dans lequel le système expert est apte à modifier les cotes d'origine ou les cotes intermédiaires des noeuds sur la base de chacun des noeuds père et/ou des noeuds fils.

**4.** Un système expert selon l'une quelconque des revendications précédentes, dans lequel le système est apte à permettre à l'utilisateur de modifier le trajet obtenu automatiquement représentant les questions et réponses obtenues automatiquement.

**5.** Un système expert selon l'une quelconque des revendications précédentes, dans lequel le système est apte à présenter à l'utilisateur les questions et réponses obtenues automatiquement sous une forme structurée questions/réponses.

**6.** Un système expert selon l'une quelconque des revendications précédentes, dans lequel le système est apte à évaluer la cote d'origine d'un noeud sur la base d'un moteur ou algorithme de recherche de texte intégral.

**7.** Un système expert selon l'une quelconque des revendications 2 à 6, dans lequel le système est apte à modifier les cotes d'origine des noeuds en deux processus, dont un premier processus est exécuté de haut en bas dans le graphe de décision et un deuxième processus est exécuté de bas en haut dans le graphe de décision.

**8.** Un système expert selon la revendication 7, dans lequel le système est apte à modifier les cotes d'origine dans le premier processus pour obtenir des cotes intermédiaires, et à modifier les cotes intermédiaires dans le deuxième processus, et dans lequel le trajet est obtenu sur la base des cotes produites dans le deuxième processus.

9. Un système expert selon la revendication 8, dans lequel le système est apte à évaluer, dans le processus de haut en bas, les cotes intermédiaires produites comme égale s à la cote d'origine du noeud respectif augmentée de la somme des cotes d'origine de tous les noeuds générateurs du noeud.

10. Un système expert selon la revendication 8 ou 9, dans lequel le système est apte à évaluer, dans le processus de bas en haut, des cotes finales comme égales au maximum des cotes des noeuds engendrés du noeud.

11. Un procédé de fourniture de résultats à des interrogations d'utilisateurs exécuté par un système expert incluant une base de connaissance, dont au moins une partie est structurée sous forme de graphe de décision, dans lequel des questions correspondent à des noeuds et des réponses à des bords du graphe de décision, et dans lequel un résultat pour une interrogation d'utilisateur est un trajet dans le graphe de décision, c'est-à-dire une séquence de questions et de réponses,
**caractérisé en ce que** le procédé comprend les étapes consistant à
évaluer des cotes d'origine des noeuds en ce qui concerne leur contenu;
modifier les cotes d'origine des noeuds en fonction des cotes d'origine d'au moins l'un des noeuds adjacents connectés pour obtenir des cotes finales;
obtenir automatiquement sur la base des cotes finales au moins un trajet, c'est-à-dire une séquence de questions et de réponses, trajet qui s'ajuste au mieux avec l'interrogation de l'utilisateur; et
présenter à l'utilisateur les questions et réponses obtenues automatiquement représentées par le trajet.

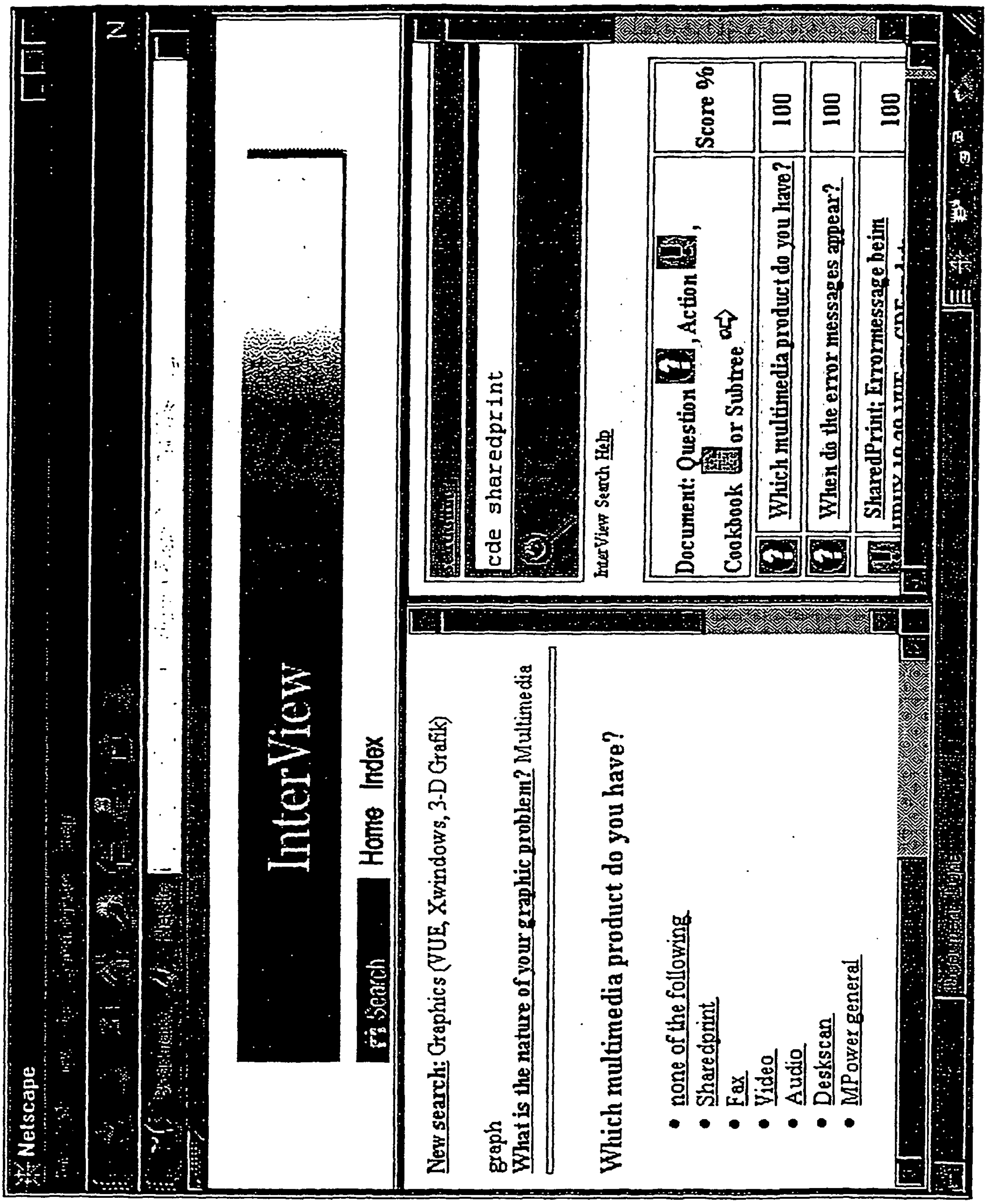
Netscape
InterView
Search
Home
Index
New search: Graphics (VUE, Xwindows, 3-D Grafik)
graph
What is the nature of your graphic problem? Multimedia
Which multimedia product do you have?
none of the following
Sharedprint
Fax
Video
Audio
Deskscan
MPower general
cde sharedprint
InterView Search Help
Document: Question, Action, Cookbook or Subtree
Score %
Which multimedia product do you have?
100
When do the error messages appear?
100
SharedPrint: Errormessage beim
100

Fig. 1

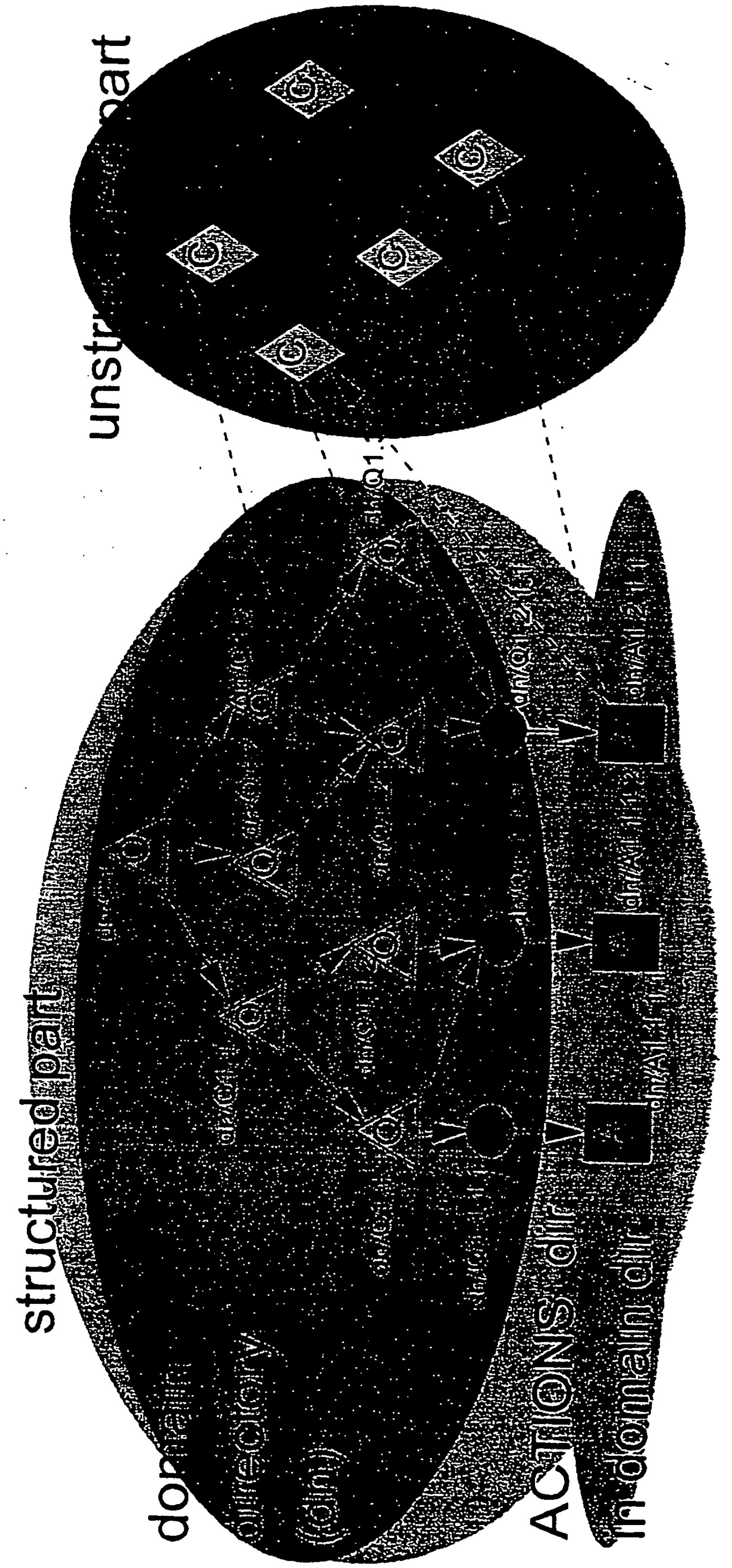


Fig. 2

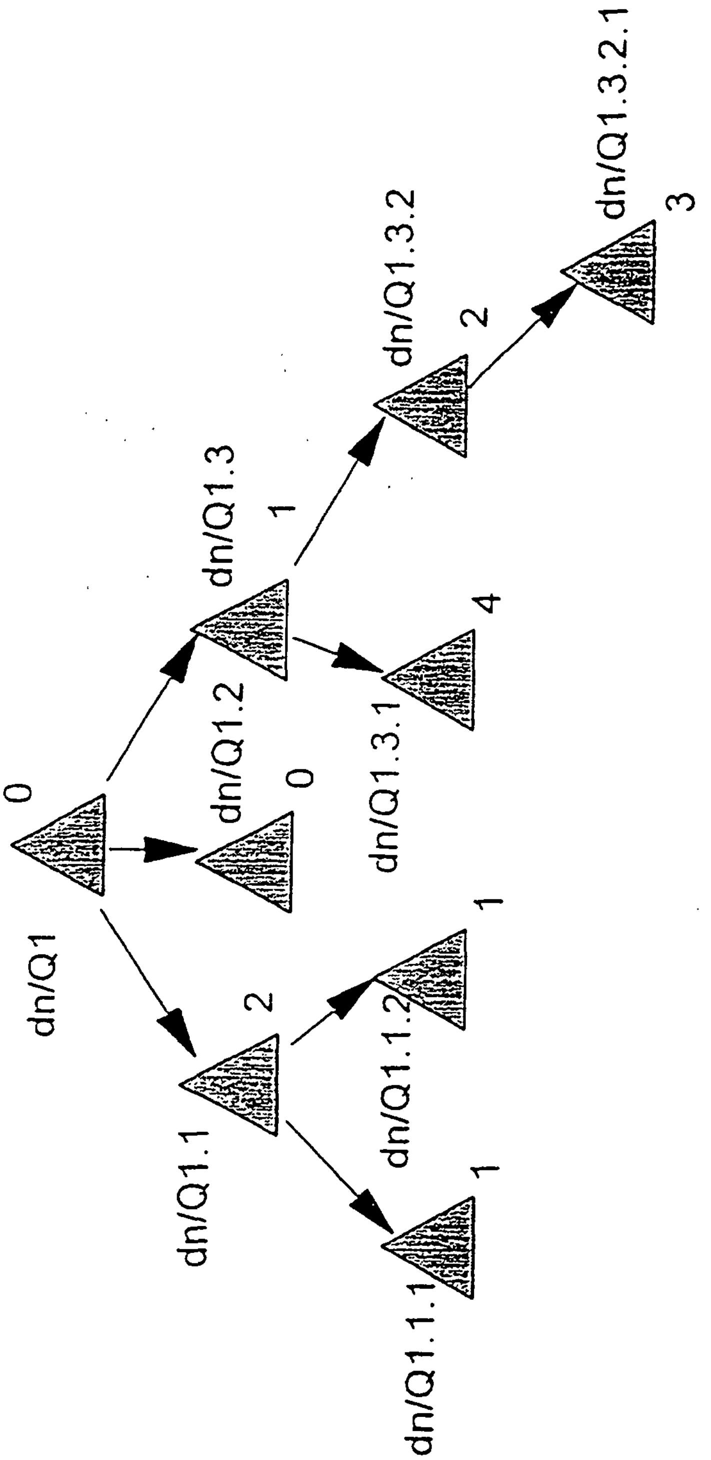
dn/Q1
0
dn/Q1.1
2
dn/Q1.2
0
dn/Q1.3
1
dn/Q1.1.1
1
dn/Q1.1.2
1
dn/Q1.3.1
4
dn/Q1.3.2
2
dn/Q1.3.2.1
3

Fig. 3

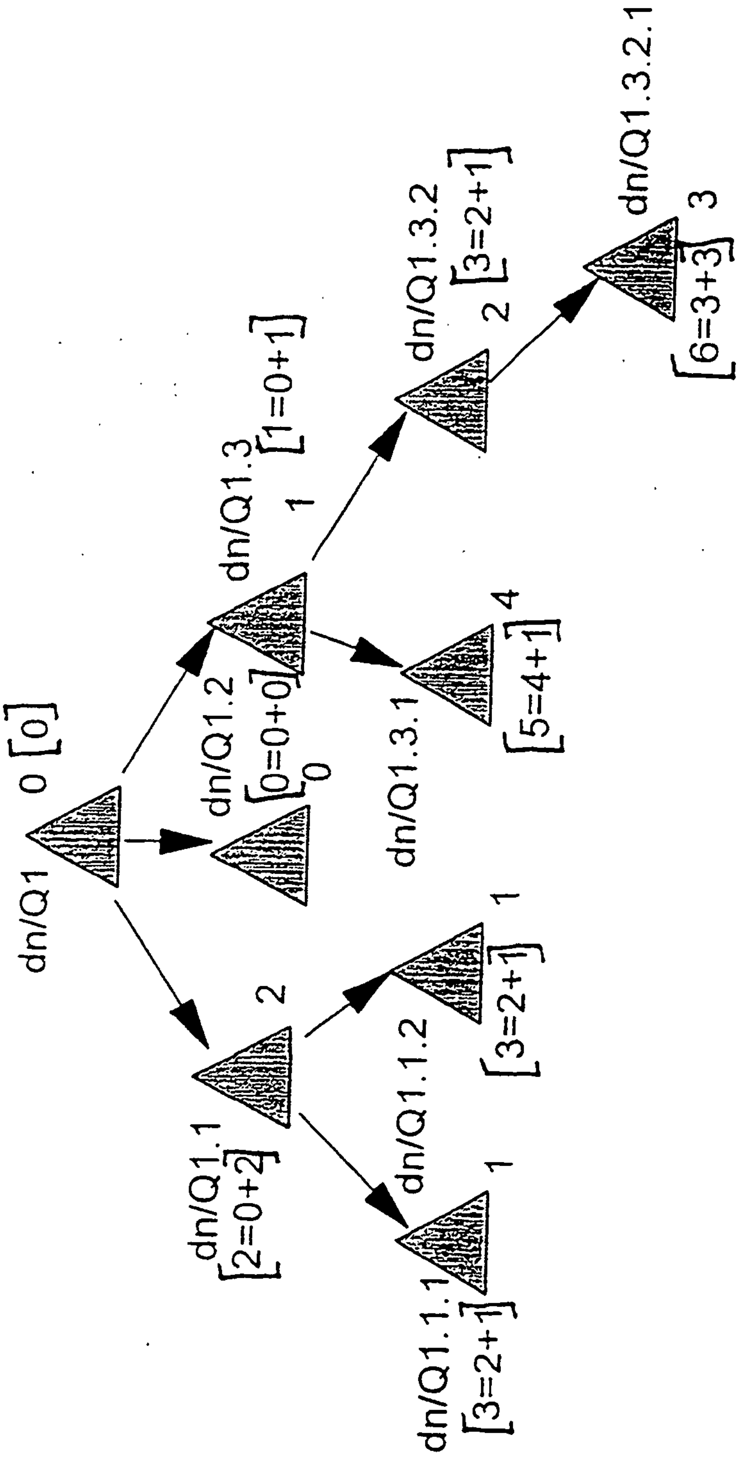
dn/Q1
0 [0]
dn/Q1.1
[2=0+2]
2
dn/Q1.1.1
[3=2+1]
1
dn/Q1.1.2
[3=2+1]
1
dn/Q1.2
[0=0+0]
0
dn/Q1.3
[1=0+1]
1
dn/Q1.3.1
[5=4+1]
4
dn/Q1.3.2
[3=2+1]
2
dn/Q1.3.2.1
[6=3+3]
3

Fig. 4

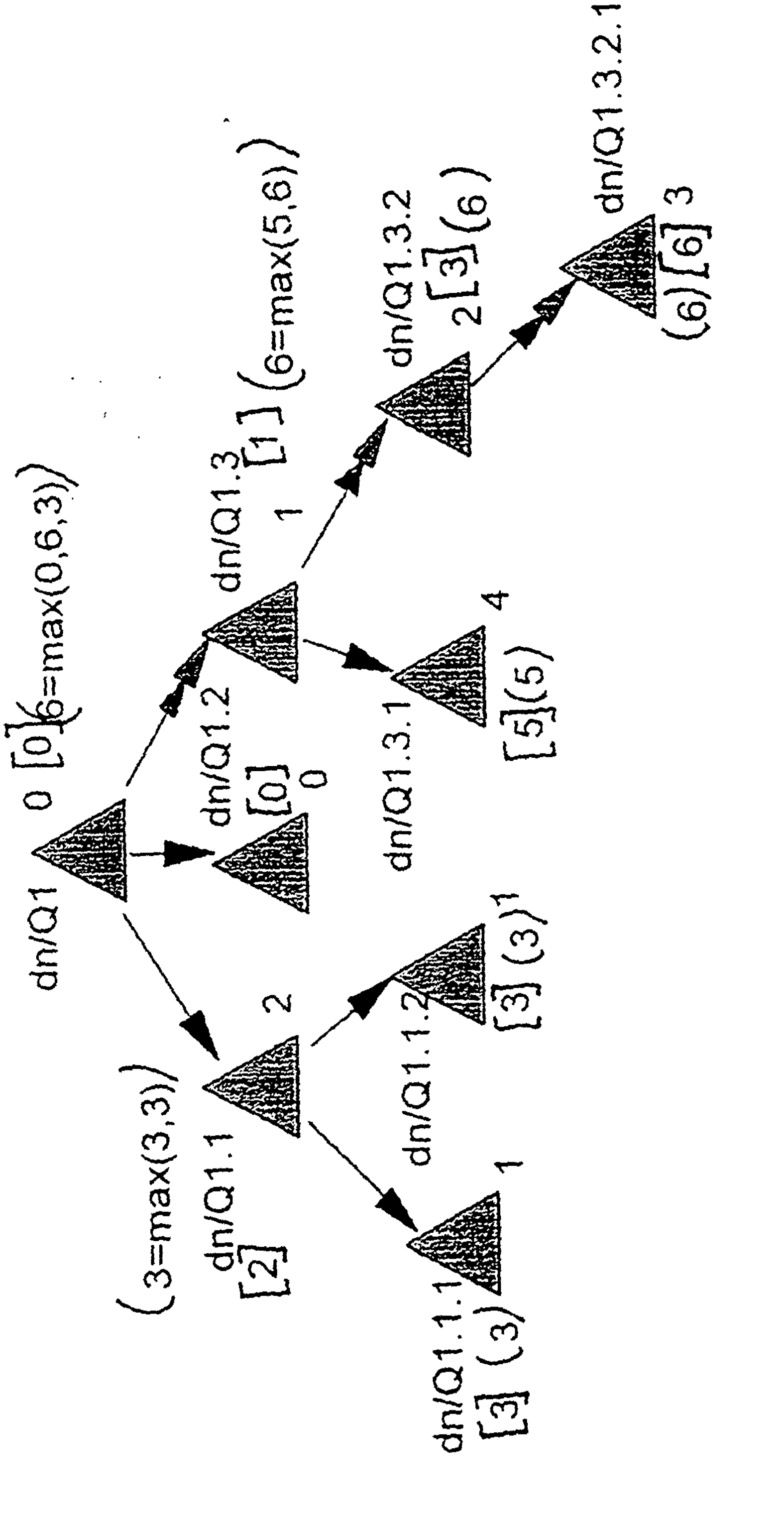
dn/Q1
0 [0] (6=max(0,6,3))
dn/Q1.1
[2]
(3=max(3,3))
dn/Q1.2
[0] 0
dn/Q1.3
1 [1] (6=max(5,6))
dn/Q1.1.1
[3] (3) 1
dn/Q1.1.2
[3] (3) 1
dn/Q1.3.1
[5] (5) 4
dn/Q1.3.2
2 [3] (6)
dn/Q1.3.2.1
(6) [6] 3

Fig. 5

Fig. 6

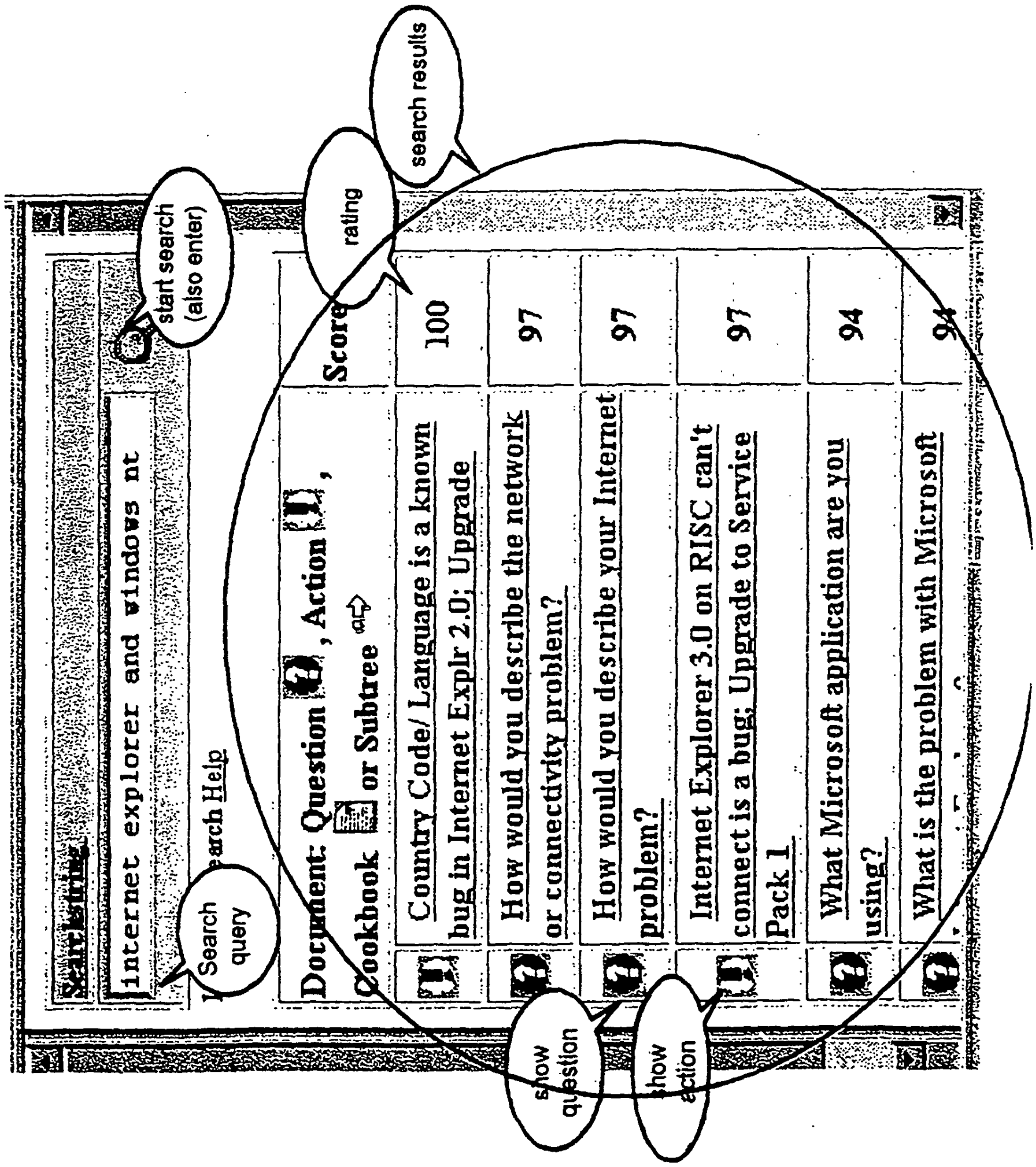
Searchstring:
internet explorer and windows nt
start search
(also enter)
Search
query
arch Help
Document: Question , Action ,
Cookbook or Subtree
Score
rating
search results
Country Code/ Language is a known
bug in Internet Explr 2.0: Upgrade
100
How would you describe the network
or connectivity problem?
97
How would you describe your Internet
problem?
97
Internet Explorer 3.0 on RISC can't
connect is a bug; Upgrade to Service
Pack 1
97
What Microsoft application are you
using?
94
What is the problem with Microsoft
94
show
question
show
action

FIG. 7

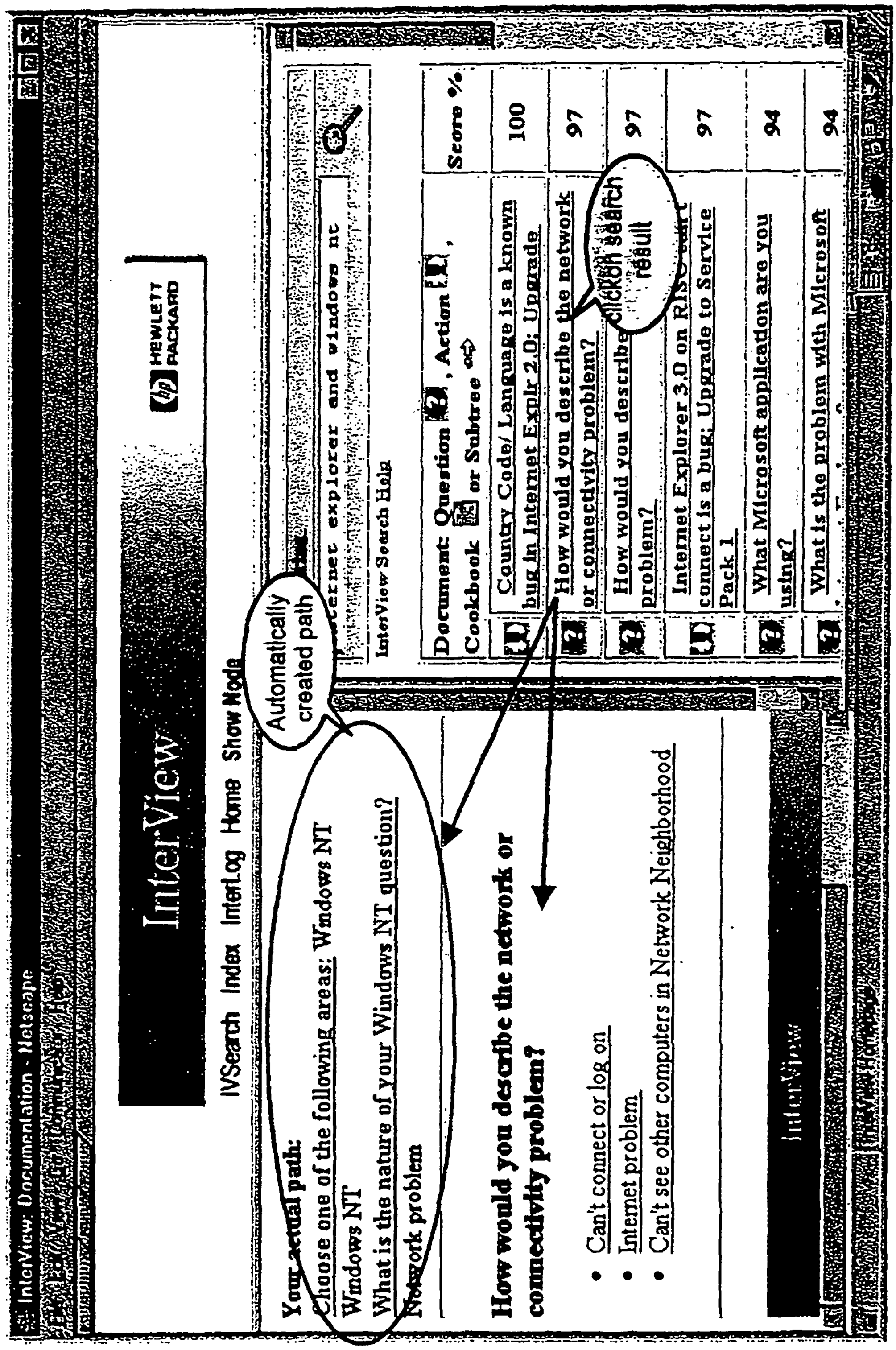


Adrian Krug, SDE Germany, ivesl.ppt

# FIG. 8

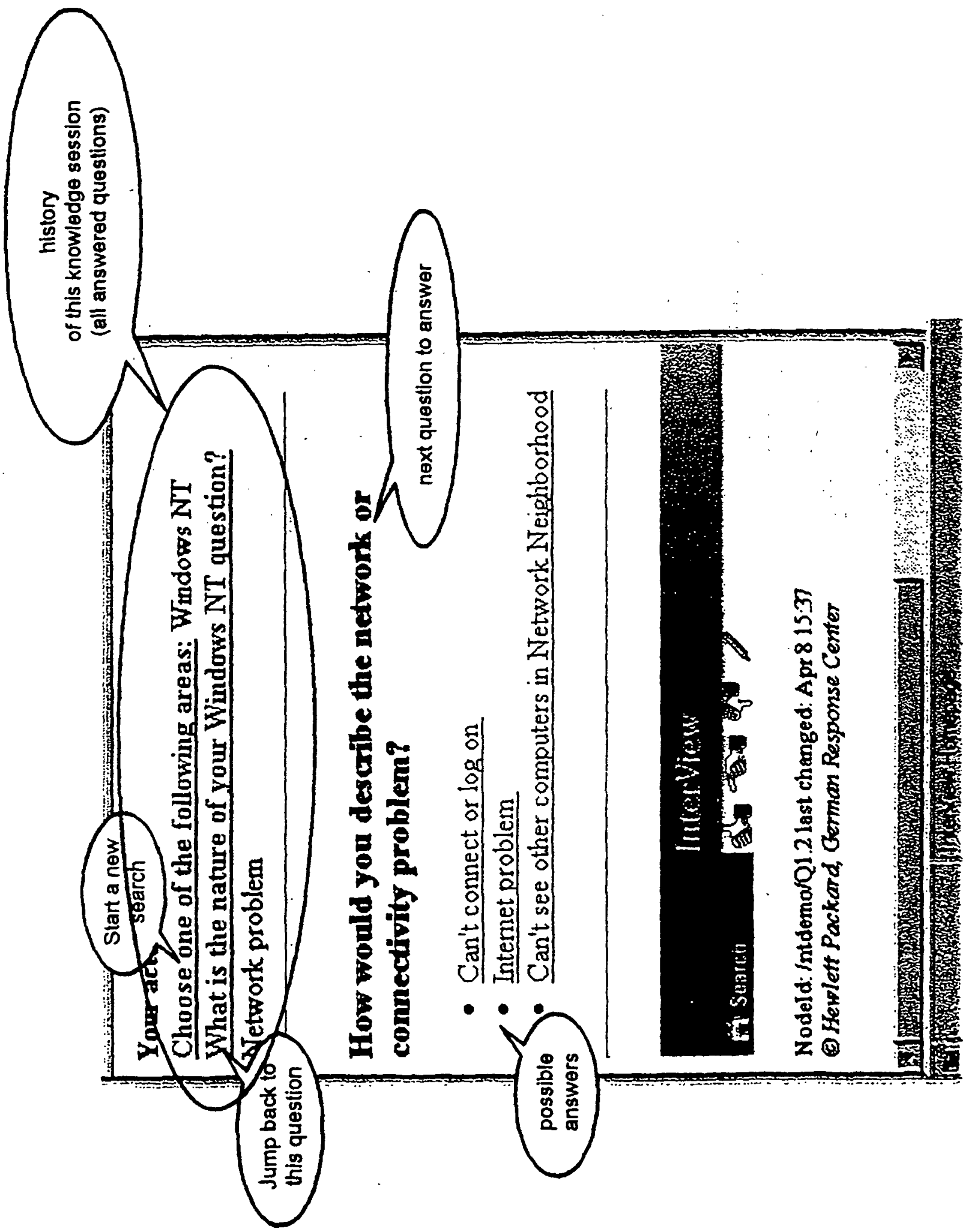
history
of this knowledge session
(all answered questions)
Start a new search
Choose one of the following areas: Windows NT
What is the nature of your Windows NT question?
Network problem
Jump back to this question
next question to answer
How would you describe the network or connectivity problem?
Can't connect or log on
Internet problem
Can't see other computers in Network Neighborhood
possible answers
Search
InterView
NodeId: Intdemo/Q1.2 last changed: Apr 8 15:37
© Hewlett Packard, German Response Center